Europäisches Patentamt

European Patent Office

Office européen des brevets

(11) Publication number: **0 038 180**
**B2**

# NEW EUROPEAN PATENT SPECIFICATION

(45) Date of publication of the new patent specification: 04.05.88

(51) Int. Cl.⁴: **C 08 G 12/12, C 09 J 3/16**

(21) Application number: **81301556.7**

(22) Date of filing: **09.04.81**

(54) **Process for the preparation of urea/formaldehyde condensates, and a binder obtained by the process.**

(30) Priority: **10.04.80 IT 2128780**

(43) Date of publication of application:
**21.10.81 Bulletin 81/42**

(45) Publication of the grant of the patent:
**21.03.84 Bulletin 84/12**

(45) Mention of the opposition decision:
**04.05.88 Bulletin 88/18**

(84) Designated Contracting States:
**BE CH DE FR GB LI**

(73) Proprietor: **Montedison S.p.A.**
**Patents & Licensing Dept. Foro Buonaparte, 31**
**P.O. Box 10528**
**I-20121 Milan (IT)**

(72) Inventor: **Camaioni, Domenico**
**24, Via Rovereto**
**Busto Arsizio (Varese) (IT)**
Inventor: **Conti, Natale**
**Via Monte Legnone, 15**
**Rasa (Varese) (IT)**

(74) Representative: **Whalley, Kevin et al**
**MARKS & CLERK 57/60 Lincoln's Inn Fields**
**London WC2A 3LS (GB)**

(56) References cited:
EP-B-0 001 596
DE-A-2 347 401
DE-A-2 655 327
DE-A-2 702 421
DE-B-2 109 754
DE-B-2 334 380
GB-A-2 018 794
JP-A-73 058 032

(56) References cited:
A. BACHMANN et al. "Amino-plaste" 2th edition, 1970, DEUTSCHER VERLAG FÜR GRUNDSTOFFINDUSTRIE, Leipzig, pages 196 to 199

Chiavari et al., Angewandte Makromolekulare Chemie, 46 (1975), pp.151-162

**The file contains technical information submitted after the application was filed and not included in this specification**

EP 0 038 180 B2

**Description**

The present invention relates to a process for the preparation of urea/formaldehyde condensates, having a low content of free formaldehyde and exhibiting high tack-values, such condensates being suitable for use as binders in the preparation of chip board made from wooden chips or shavings.

Binders with a high tack are required for the preparation of chip board panels produced on multistage equipment and with a preceding cold pre-pressing. On such an equipment, a cold pre-pressed panel is subjected to mechanical stresses before it enters a press for final moulding under heat, and the binder must thus impart to the panel a tack sufficient to avoid scaling off of the panel while not yet heat-moulded.

A low content of free formaldehyde and freeable formaldehyde allows improvement of the environmental hygiene of the panel-producing equipment, and above all permits manufactured articles to be obtained with a low content of free formaldehyde, which are thus particularly suitable for home furnishings.

The present invention therefore aims to develop a process for the preparation of formaldehyde condensates with urea, exhibiting a high tack and a low content of free or freeable formaldehyde.

Accordingly, the present invention provides a process for preparing condensation products of formaldehyde with urea, comprising the following sequence of operations:

(a) reacting (i) formaldehyde in the form of a precondensate with urea with (ii) urea, in an overall molar ratio of formaldehyde/urea of from 2:1 to 3.5:1, in an aqueous solution, at a temperature of from 80° to 100°C and at a pH of from 4 to 5.8, up to a viscosity of the solution, at 20°C, from 400 to 2,000 mPas, corresponding to a content of dry product, referred to the sum of reacted and unreacted monomers, of from 75% to 80% by weight;

(b) adding urea to the reaction product until there is attained an overall molar ratio of formaldehyde/urea of from 1.5:1 to 1.9:1, and carrying on the reaction at a pH of from 5.9 to 6.8 and at a temperature of from 80° to 95°C, up to a viscosity of the solution, at 20°C, of from 2,000 to 3,000 mPas, corresponding to a content of dry product, referred to the sum of reacted and unreacted monomers, of from 75% to 80% by weight; and

(c) adding urea to the reaction product, under cooling conditions of the solution, at a pH of from 7.2 to 8.5, in such an amount as to obtain an overall molar ratio of formaldehyde/urea of from 1.15:1 to 1.4:1.

Operation (a) is preferably effected at a molar ratio of formaldehyde/urea of from 2.2:1 to 2.5:1, at a pH of from 5.3 to 5.6, and up to a viscosity of the solution of from 1,200 to 1,600 mPas.

Operation (b) is preferably effected at a pH of from 6.2 to 6.5, and up to a viscosity of the solution of from 2,400 and 2,800 mPas.

Operation (c) is carried out with simultaneous cooling of the solution to a temperature lower than the reaction temperature of the operation (b), and preferably at a temperature equal to or lower than 70°C, and is preferably effected at a molar ratio of formaldehyde/urea of from 1.15:1 to 1.3:1.

In order to improve the preservability of the final product obtained through operation (c), it is possible to successively add to the product an alkali, so as to bring the pH value up to 7.5—9, more preferably 7.8—8.5. The addition of alkali may more conveniently be carried out at a temperature of from 20° to 30°C.

Formaldehyde and urea may be used in the various above described operational stages either in the solid state or in solution. In operation (a) the formaldehyde is used in the form of a pre-condensate with urea, for instance as formurea, which is a condensation produce of about 5 mols of formaldehyde with one mole of urea.

Each one of operations (a) and (b) may be achieved in a plurality of successive condensation operations (in general not more than 5), at pH values, with additional quantities of urea, and up to viscosity values comprised within the ranges defined above in accordance with the invention.

For instance, the operations (a) and (b) may be suitably replaced by the three following operations, in which operation (a) is conducted in two successive stages (a') and (a''):

(a') reaction between (i) formaldehyde in the form of a precondensate with urea and (ii) urea, in an overall molar ratio of from 2.5:1 and 3.5:1, but preferably from 2.9:1 to 3.2:1, in an aqueous solution, at a temperature of from 90° to 100°C and at a pH of from 4 to 5.5, but preferably from 4.6 to 5.0, up to a viscosity at 20°C of from 400 to 1,000 mPas, but preferably from 500 to 700 mPas, for an amount of dry product referred to the sum of reacted and unreacted monomers of from 75% to 80%;

(a'') addition of urea up to a molar ratio of formaldehyde/urea of from 2:1 to 2.5:1, and continuation of the condensation at a temperature of from 90° to 100°C and at a pH of from 5.0 to 5.5, up to a viscosity at 20°C of from 1,500 to 2,000 mPas, for an amount of dry product within the above indicated range;

(b') neutralization of the reaction product with an alkali up to a pH of from 6 and 6.5, and continuation of the reaction, after adding urea up to a formaldehyde/urea molar ratio of from 1.5:1 to 1.9:1 at 80°—95°C, up to a viscosity at 20°C of from 2,000 and 3,000 mPas, for an amount of dry product within the above indicated range.

The above operations are followed by:

(c') addition of urea to the reaction product, under cooling conditions of the solution, at a pH value of from 7.2 to 8.5, up to a molar ratio of formaldehyde/urea of from 1.15:1 to 1.4:1.

In each operational stage or step, the adjustment of the pH value may be obtained by the addition to

2

the reaction mixture of buffer salts, while the neutralization operations may be carried out with alkalis such as caustic soda, sodium carbonate, calcium hydroxide, and amines.

The process according to the present invention allows products to be obtained which have a low content of free and freeable formaldehyde, and which, at the same time, have a tack which, at an equal content of formaldehyde, is not obtainable when effecting the condensation in an acid medium in the absence of above described operation (b).

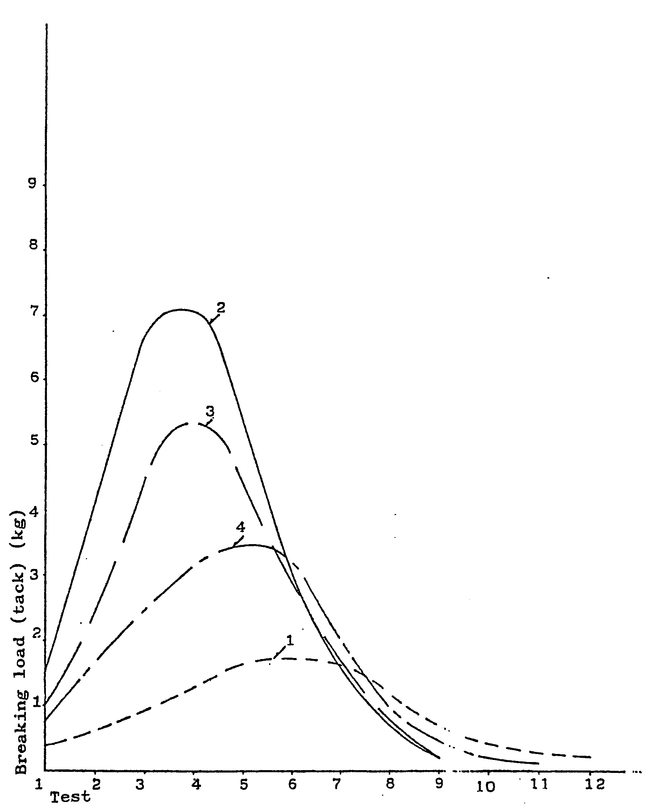

The invention will be further described with reference to the following illustrative Examples. In the Examples reference will be made to the accompanying drawing, which is a graph illustrating the breaking load values (or tack) with reference to the number of determinations for each of the binders prepared according to the Examples.

### Example 1 (for comparative purposes)

This example concerns the preparation, through one single condensation operation in an acid medium, of a urea/formaldehyde binder having a final molar ratio of formaldehyde/urea of 1.4:1.

The characteristics of the products thus obtained were determined by means of the following methods:

### Value of the tack

100 g of industrial wooden chips, suitably classed (with fractions comprised between 3.2 and 10 mm), were impregnated with 12 g of a 50% binder solution in a suitable mixer. With 20 g of this mix there was formed a tablet of 50 mm diameter (using a maximum load pressure of 400 kg), which was then broken up. The broken up bound chip tablet was further crumbled and subjected to blowing with nitrogen for 15 seconds. After such treatment a new tablet was formed which was once again subjected to breaking up according to the same previous procedures. These operations and measurements were repeated until a breaking load equal to or below 0.2 kg was obtained.

### Free formaldehyde

By treatment of a sample with bisulphite in the presence of a measured excess of acid and alkalimetric titration of the unreacted acid.

### Freeable formaldehyde

A binder sample was heated in the presence of a catalyst consisting of $NH_4Cl$ (40 g), 32% $NH_4OH$ (39 g), urea (40 g) and 266 g of $H_2O$; the formaldehyde developed was caused to be absorbed by HCl and its quantity was determined by polarography.

### Methylenic formaldehyde

Calculated as the difference between total formaldehyde and the oxidizable formaldehyde.

### Free formaldehyde in the panels

Colorimetric proportioning of the formaldehyde on an aqueous extract of the panels (method Fesyp).

566.1 parts by weight (b. w.) of an 80% solution of formurea,

266.7 parts b. w. of a 71% urea solution, 0.5 parts b. w. of caustic soda at 30% concentration, and 0.3 parts b. w. of acetic acid at 80% concentration were loaded into a reactor, then heated up to 94°C and 0.3 parts b. w. of 80% acetic acid were added thereto, thereby obtaining a solution with a pH of 5.8. This mixture was then condensed at 95°C up to viscosity, at 20°C, of 1,200 mPas, with reference to a content of dry product, referred to the loaded monomers, of about 77%. At this point, 1.3 parts b. w. of 30% caustic soda were added to the mixture, which was then cooled. The pH of the solution was equal to 7.8. Once the temperature had reached 55°C, there were added 163.4 parts b. w. of an 86.5% urea solution and 1.4 parts b. w. of a 30% caustic soda for the final adjustment of the pH to a value of from 7.8 to 8.5, whereafter the cooling was continued until a temperature of 25°C was reached.

The binder thus obtained exhibited the following characteristics:

pH, at 20°C = 8.5
Viscosity at 20°C = 430 mPas
Dry content = 65.5% b. w.
Maximum tack value = 1.7 kg (according to curve 1 of the accompanying drawing).

Molar ratio formaldehyde/urea: first stage = 2.0
final stage = 1.40

Free formaldehyde = 0.2% b. w.
Freeable formaldehyde = 0.6% b. w. based on the dry product
Methylenic formaldehyde = 29% based on the total formaldehyde
Free formaldehyde in the panels: 20 mg/100 g of chip board.

3

### Example 2

Into a reactor were loaded 521.2 parts b. w. of an 80% b. w. aqueous solution of formurea, 211.6 parts b. w. of a 71% urea solution, 0.5 parts b. w. of 30% caustic soda, and 0.3 parts b. w. of 80% acetic acid. The mixture was heated up to 94°C and then 0.35 parts b. w. of 80% acetic acid were added thereto whereby there was obtained a solution with a pH of 5.6. The mixture was condensed at 95°C up to a viscosity at 20°C of 1,500 mPas. The content of total monomers in the solution amounted to about 77%.

At this point there were added 0.43 parts b. w. of 30% caustic soda and 111.8 parts b. w. of a 71% urea solution, whereby the pH value of the solution became equal to 6.4, and condensation was carried on at 90°C up to a viscosity at 20°C of 2,500 mPas. The total content of monomers in the solution amounted to about 76%.

The solution was then neutralized with 0.92 parts b. w. of 30% caustic soda, thus obtaining a pH of 8.0. The reaction mass was then cooled down. Once the temperature reached 55°C, 151.4 parts b. w. of a 71% urea solution and 1.5 parts b. w. of 30% caustic soda were added to the reaction mixture, thus bringing the pH to a final value of from 7.8 to 8.5, whereafter the cooling was continued until a temperature of 25°C was reached.

The binder thus obtained exhibited the following characteristics:

pH, at 20°C = 8.0
Viscosity at 20°C = 600 mPas
Content of dry product = 64.5% b. w.
Maximum tack value = 7.1 kg (according to curve 2 of the accompanying drawing).

Molar ratio formaldehyde/urea:

First condensation: 2.2
Second condensation: 1.7
Final: 1.30
Free formaldehyde = 0.2% b. w.
Freeable formaldehyde = 0.3% b. w. based on the dry product
Methylenic formaldehyde = 41.3% based on the total formaldehyde
Free formaldehyde in the panels = 10 mg/100 g of chip board.

### Example 3

Into a reactor were loaded 521.2 parts b. w. of an aqueous 80% formurea solution, 211.6 parts b. w. of a 71% urea solution, 0.49 parts b. w. of 30% caustic soda, and 0.28 parts b. w. of 80% acetic acid; thereupon there were added 0.27 parts b. w. of 80% acetic acid, thus bringing the pH value to 5.7, and then the mixture was condensed at 95°C up to a viscosity at 20°C of 1,400 mPas.

At this point 0.46 parts b. w. of 30% caustic soda and 84.5 parts b. w. of a 71% urea solution were added to the mixture, whereby the pH value of the solution became equal to 6.3, and the condensation was then carried on at 90°C up to a viscosity at 20°C of 2,500 mPas.

Then there were added 0.9 parts b. w. of caustic soda, thus bringing the pH value up to 7.9, after which the mixture was cooled. Once the temperature attained 60°C, there were added 178.9 parts b. w. of a 71% urea solution and 1.5 parts b. w. of 30% caustic soda, thus bringing the pH to a value of from 7.8 to 8.5, whereafter the cooling was continued until a temperature of 25°C was reached.

The binder obtained exhibited the following characteristics:

pH, at 20°C = 7.9
Viscosity at 20°C = 515 mPas
Content of dry product = 64.2% b. w.
Maximum tack value = 5.3 kg (according to curve 3 of the accompanying drawing).

Molar ratio formaldehyde/urea:

First stage: 2.2
Second stage: 1.8
Final: 1.28
Free formaldehyde = 0.1% b. w.
Freeable formaldehyde = 0.25% b. w. based on the dry product
Methylenic formaldehyde = 35.8% based on the total formaldehyde
Free formaldehyde in the panels = 8 mg/100 g of chip board.

### Example 4

Into a reactor were loaded 539.4 parts b. w. of an 80% formurea solution and 171.8 parts b. w. of a 71% urea solution, the mixture was heated up to 94°C, and there were then added 0.3 parts b. w. of 80% acetic acid, thus bringing the pH of the solution to 5.1. The solution was then condensed at 95°C up to a viscosity at 20°C of 1,400 mPas.

At this point there were added 0.5 parts b. w. of 30% caustic soda and 109.4 parts b. w. of a 71% urea solution, whereby the pH value was increased to 6.0, and the condensation was then carried on at 90°C until a viscosity at 20°C of 2,500 mPas was attained.

Thereupon there were added 0.7 parts b. w. of 30% caustic soda and then the mixture was cooled down. The pH of the solution was 8.0. Once the temperature reached 50°C, 176.3 parts b. w. of a 71% urea solution and 1.6 parts b. w. of 30% caustic soda were added to the mixture to adjust the pH to a final value of from 7.8 to 8.5, whereafter the cooling was continued until a temperature of 25°C was reached.

The binder thus obtained exhibited the following characteristics:

pH, at 20°C = 8.1
Viscosity at 20°C = 540 mPas
Content of dry product = 64.7% b. w.
Maximum tack value = 3.5 kg (according to curve 4 of the accompanying drawing).

Molar ratio formaldehyde/urea:

First stage: 2.5
Second stage: 1.9
Final: 1.37
Free formaldehyde = 0.2% b. w.
Freeable formaldehyde = 0.45% b. w. based on the dry product
Methylenic formaldehyde = 33.5% based on the total formaldehyde
Free formaldehyde in the panels = 15 mg/100 g of chip board.

### Claims

1. A process for preparing condensation products of formaldehyde with urea, characterized by comprising the following sequence of operations:

(a) reacting (i) formaldehyde in the form of a precondensate with urea with (ii) urea, in an overall molar ratio of formaldehyde/urea of from 2:1 to 3.5:1, in an aqueous solution, at a temperature of from 80° to 100°C and at a pH of from 4 to 5.8, up to a viscosity of the solution, at 20°C, of from 400 to 2,000 mPas, corresponding to a content of dry product, referred to the sum of reacted and unreacted monomers, of from 75% to 80% by weight;

(b) adding urea to the reaction product until there is attained an overall molar ratio of formaldehyde/urea of from 1.5:1 to 1.9:1, and carrying on the reaction at a pH of from 5.9 to 6.8 and at a temperature of from 80° to 95°C, up to a viscosity of the solution, at 20°C, of from 2,000 to 3,000 mPas, corresponding to a content of dry product, referred to the sum of reacted and unreacted monomers, of from 75% to 80% by weight; and

(c) adding urea to the reaction product, under cooling conditions of the solution, at a pH of from 7.2 to 8.5, in such an amount as to obtain an overall molar ratio of formaldehyde/urea of from 1.15:1 to 1.4:1.

2. A process as claimed in Claim 1, characterized in that operation (a) is effected at a molar ratio of formaldehyde/urea of from 2.2:1 to 2.5:1, at a pH of from 5.3 to 5.6, and up to a viscosity of the solution of from 1,200 to 1,600 mPas.

3. A process as claimed in Claim 1 or 2, characterized in that operation (b) is effected at a pH of from 6.2 to 6.5, and up to a viscosity of the solution of from 2,400 to 2,800 mPas.

4. A process as claimed in any of Claims 1 to 3, characterized in that operation (c) is effected at a molar ratio of formaldehyde/urea of from 1.15:1 to 1.3:1.

5. A binder for chip board obtained by the process according to any of Claims 1 to 4.

### Patentansprüche

1. Verfahren zur Herstellung von Kondensationsprodukten von Formaldehyd mit Harnstoff, dadurch gekennzeichnet, daß es die folgende Folge von Maßnahmen umfaßt:

(a) Umsetzung von (i) Formaldehyd in Form eines Vorkondensates mit (ii) Harnstoff in einem Gesamt-Molverhältnis von Formaldehyd/Harnstoff von 2:1 bis 3,5:1 in einer wässrigen Lösung. bei einer Temperatur von 80 bis 100°C und einem pH von 4 bis 5,8 bis zu einer Viskosität der Lösung bei 20°C von 400 bis 2,000 mPas, entsprechend einem Gehalt an Trockenprodukt, bezogen auf die Summe von umgesetzten und nicht-umgesetzten Monomeren, von 75 bis 80 Gew.-%;

(b) Zugabe von Harnstoff zu dem Reaktionsprodukt, bis ein Gesamt-Molverhältnis von Formaldehyd/Harnstoff von 1,5:1 bis 1,9:1 erreicht ist, und Fortsetzen der Reaktion bei einem pH von 5,9 bis 6,8 und einer Temperatur von 80 bis 95°C, bis zu einer Viskosität der Lösung bei 20°C von 2,000 bis 3,000 mPas, entsprechend einem Gehalt an Trockenprodukt, bezogen auf die Summe von umgesetzten und nicht-umgesetzten Monomeren, von 75 bis 80 Gew.-%; und

## 0 038 180

(c) Zugabe von Harnstoff zu dem Reaktionsprodukt unter Kühlung der Lösung bei einem pH von 7,2 bis 8,5 in einer derartigen Menge, daß ein Gesamt-Molverhältnis von Formaldehyd/Harnstoff von 1,15:1 bis 1,4:1 erhalten wird.

2. Verfahren nach Anspruch 1, dadurch gekennzeichnet, daß die Maßnahme (a) bei einem Molverhältnis von Formaldehyd/Harnstoff von 2,2:1 bis 2,5:1, einem pH von 5,3 bis 5,6 und bis zu einer Viskosität der Lösung von 1,200 bis 1,600 mPas durchgeführt wird.

3. Verfahren nach Anspruch 1 oder 2, dadurch gekennzeichnet, daß die Maßnahme (b) bei einem pH von 6,2 bis 6,5 und bis zu einer Viskosität der Lösung von 2,400 bis 2,800 mPas durchgeführt wird.

4. Verfahren nach irgendeinem der Ansprüche 1 bis 3, dadurch gekennzeichnet, daß die Maßnahme (c) bei einem Molverhältnis von Formaldehyd/Harnstoff von 1,15:1 bis 1,3:1 durchgeführt wird.

5. Bindemittel für Spanplatten, erhalten durch das Verfahren nach irgendeinem der Ansprüche 1 bis 4.

**Revendications**

1. Un procédé de préparation de produits de condensation de formaldéhyde avec de l'urée, caractérisé en ce qu'il comprend les étapes opératoires suivantes:

(a) réaction de (i) formaldéhyde sous forme d'un précondensat avec l'urée, et (ii) d'urée, en un rapport molaire total formaldéhyde/urée de 2/1 à 3,5/1, dans une solution aqueuse à une température comprise entre 80 et 100°C et à un pH de 4 à 5,8, jusqu'à l'obtention d'une viscosité de la solution à 20°C de 400 à 2.000 MPaS, ce qui correspond à une teneur en produit sec, en se référant à la somme des monomères ayant réagi et n'ayant pas réagi, de 75 à 80% en poids;

(b) addition d'urée au produit de la réaction jusqu'à ce que l'on obtienne un rapport molaire total formaldéhyde/urée de 1,5/1 à 1,9/1, et la réaction se développant à un pH de 5,9 à 6,8 et à une température de 80 à 95°C, jusqu'à ce que la viscosité de la solution à 20°C soit de 2.000 à 3.000 MPaS, ce qui correspond à une teneur en produit sec, en se référant à la somme des monomères ayant réagi et n'ayant pas réagi, de 75 à 80% en poids; et

(c) addition d'urée au produit de la réaction, dans des conditions de refroidissement de la solution à un pH compris entre 7,2 et 8,5, en une quantité telle que l'on obtienne un rapport molaire total formaldéhyde/urée de 1,15/1 à 1,4/1.

2. Un procédé tel que revendiqué dans la revendication 1, caractérisé en ce que l'opération (a) est effectuée en un rapport molaire formaldéhyde/urée compris entre 2,2/1 et 2,5/1, un pH compris entre 5,3 et 5,6 et jusqu'à l'obtention d'une viscosité de la solution comprise entre 1.200 et 1.600 MPaS.

3. Un procédé tel que revendiqué à la revendication 1 ou 2, caractérisé en ce que l'opération (b) est effectuée à un pH compris entre 6,2 et 6,5, et jusqu'à l'obtention d'une viscosité de la solution comprise entre 2.400 et 2.800 MPaS.

4. Un procédé tel que revendiqué dans l'une quelconque des revendications 1 à 3, caractérisé en ce que l'opération (c) est effectuée avec un rapport molaire formaldéhyde:urée compris entre 1,15/1 et 1,3/1.

5. Un liant pour panneaux agglomérés obtenu par le procédé selon l'une quelconque des revendications 1 à 4.

6